# EUROPÄISCHE PATENTSCHRIFT

(11) **EP 0 313 965 B1**
(45) Veröffentlichungstag und Bekanntmachung des Hinweises auf die Patenterteilung: **16.03.1994**
(21) Anmeldenummer: 88117317.3
(22) Anmeldetag: 18.10.1988
(51) Int. Cl.: C09B 48/00

(54) **Verfahren zur Herstellung von Dihydrochinacridonen, Chinacridonen und Chinacridonchinonen**
Process for the manufacture of dihydroquinacridones, of quinacridones and of quinacridone quinones
Procédé de fabrication de dihydroquinacridones, de quinacridones et de quinacridonequinones

(30) Priorität: 27.10.1987 DE 3736261; 22.04.1988 DE 3813625
(43) Veröffentlichungstag der Anmeldung: 03.05.1989
(73) Patentinhaber: BASF Aktiengesellschaft, 67063 Ludwigshafen (DE)
(72) Erfinder: Bender, Herbert, Dr., D-6737 Boehl-Iggelheim (DE); Colberg, Horst, Dr., D-6700 Ludwigshafen (DE); Teich, Friedhelm, Dr., D-7500 Karlsruhe 41 (DE); Kemper, Reinhard, Dr., D-6900 Heidelberg (DE)

(56) Entgegenhaltungen:
- DE-A- 2 460 538
- US-A- 2 821 529
- CHEMICAL ABSTRACTS, Band 97, Nr. 14, Oktober 1982, Columbus, OH (US); Seite 68, Nr. 111293v#
- CHEMICAL ABSTRACTS, Band 97, Nr. 4, Juli 1982, Columbus, OH (US); Seite 74, Nr. 25168b#

## Beschreibung

Die vorliegende Erfindung betrifft ein neues Verfahren zur Herstellung von Dihydrochinacridonen, Chinacridonen und Chinacridonchinonen durch Cyclisierung von 2,5-Dianilino-3,6-dihydroterephthalsäurederivaten oder 2,5-Dianilinoterephthalsäurederivaten in flüssigem oder festem Aggregatzustand oder als Lösung, jeweils in feinverteilter Form, oder in der Gasphase.

Die US-A-2 821 529 lehrt die Cyclisierung von 2,5-Dianilino-3,6-dihydroterephthalsäureester oder dessen kernsubstituierten Derivaten zu Dihydrochinacridonen. Die Umsetzung findet bei einer Temperatur von ca. 250°C unter Rühren in Lösung statt, wobei als Lösungsmittel ein Biphenyl/Diphenyloxid-Gemisch dient. Die Reaktionsdauer ist sehr lange und beträgt 60 oder 90 Minuten. In einer Folgereaktion wird das gebildete Dihydrochinacridon in Lösung und unter Erhitzen zum Rückfluß mit Nitrobenzolsulfonsäure als Oxidationsmittel zu Chinacridon oxidiert.

Aus der US-A-3 907 805 ist die Herstellung von Chinacridon durch thermische Dehydrierung von Dihydrochinacridon in der Gasphase bei einer Temperatur von 600 bis 660°C bekannt. Auf die Herstellung des als Ausgangsprodukt verwendeten Dihydrochinacridons wird in diesem Zusammenhang jedoch nicht eingegangen.

Die Herstellung von Dihydrochinacridon wird auch in der JP-A-40 562/1975 beschrieben. Die Cyclisierung von 3-Alkoxycarbonyl-2-anilino-1,4-dihydroacridan-9-on bei einer Temperatur von 260 bis 300°C in der Gasphase in einem Fest-, Wirbelbett oder Sprüh-Reaktor liefert Dihydrochinacridon bei Kontaktzeiten, die zwischen 2 und 30 Minuten liegen. Das als Ausgangsverbindung verwendete Acridanon wird dabei durch Cyclisierung von 2,5-Dianilino-3,6-dihydroterephthalsäureester in Lösung hergestellt.

Aufgabe der vorliegenden Erfindung war es, ein Verfahren bereitzustellen, nach dem 2,5-Dianilino-3,6-dihydroterephthalsäureverbindungen oder 2,5-Dianilino-terephthalsäureverbindungen in einfacher Weise direkt in Dihydrochinacridone, Chinacridone oder Chinacridonchinone übergeführt werden können.

Es wurde gefunden, daß die Herstellung von Dihydrochinacridonen der Formel I 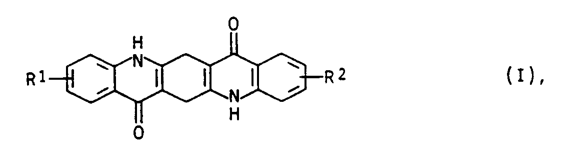
von Chinacridonen der Formel II 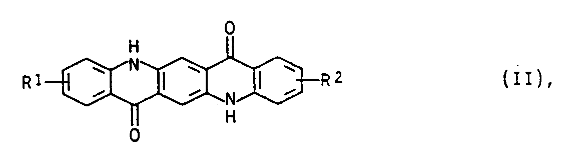
von Chinacridonchinonen der Formel III 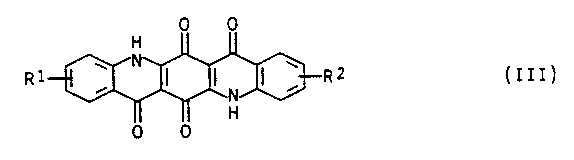
oder von deren Gemischen, wobei R¹ und R² in den Formeln I, II und III gleich oder verschieden sind und unabhängig voneinander jeweils Wasserstoff, Chlor, Brom, C₁-C₁₀-Alkoxy, C₁-C₁₀-Alkyl oder gegebenenfalls substituiertes Phenyl bedeuten, vorteilhaft gelingt, wenn man
a) zur Herstellung von Dihydrochinacridonen der obengenannten Formel I 2,5-Dianilino-3,6-dihydroterephthalsäurederivate der Formel IV 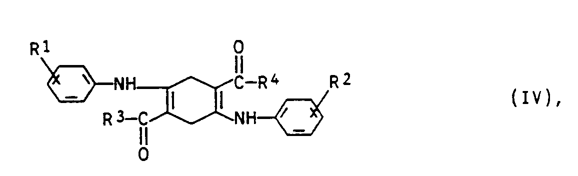 in der R¹ und R² jeweils die obengenannte Bedeutung besitzen und R³ und R⁴ gleich oder verschieden sind und unabhängig voneinander jeweils C₁-C₁₀-Alkoxy, Amino, C₁-C₁₀-Mono- oder Dialkylamino oder Halogen bedeuten, in flüssigen oder festen Aggregatzustand, jeweils in feinverteilter Form, oder in der Gasphase bei einer Temperatur von 350 bis 500°C cyclisiert,
b) zur Herstellung von Chinacridonen der obengenannten Formel II 2,5-Dianilino-3,6-dihydroterephthalsäurederivate der obengenannten Formel IV in flüssigem oder festem Aggregatzustand oder als Lösung, jeweils in feinverteilter Form bei einer Temperatur von 400 bis 700°C cyclisiert und dehydriert oder 2,5-Dianilinoterephthalsäurederivate der Formel V 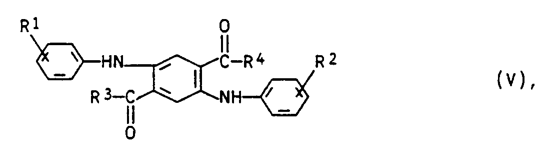 in der R¹, R², R³ und R⁴ jeweils die obengenannte Bedeutung besitzen, in flüssigem oder festem Aggregatzustand, jeweils in feinverteilter Form, oder in der Gasphase bei einer Temperatur von 300 bis 700°C cyclisiert und
c) zur Herstellung von Chinacridonchinonen der obengenannten Formel III 2,5-Dianilino-3,6-dihydroterephthalsäurederivate der obengenannten Formel IV oder 2,5-Dianilinoterephthalsäurederivate der obengenannten Formel V in flüssigem oder festem Aggregatzustand oder als Lösung, jeweils in feinverteilter Form, oder in der Gasphase bei einer Temperatur von 300 bis 700°C in Gegenwart eines Oxidationsmittels cyclisiert.

R¹, R², R³ und R⁴ in den Formeln I bis V bedeuten z.B. Methoxy, Ethoxy, Propoxy, Isopropoxy, Butoxy, Isobutoxy, sec-Butoxy, Pentyloxy, Isopentyloxy, Neopentyloxy, Hexyloxy, Isohexyloxy, Heptyloxy, Octyloxy, 2-Ethylhexyloxy, Nonyloxy oder Decyloxy.

R¹ und R² in den Formeln I bis V bedeuten weiterhin z.B. Methyl, Ethyl, Propyl, Isopropyl, Butyl, Isobutyl, sec-Butyl, Pentyl, Isopentyl, Neopentyl, Hexyl, Isohexyl, Heptyl, Octyl, 2-Ethylhexyl, Nonyl, Decyl, Phenyl oder beispielsweise durch C₁-C₄-Alkyl, C₁-C₄-Alkoxy oder Halogen, insbesondere Chlor oder Brom, substituiertes Phenyl, wie 4-Methylphenyl, 2,4- oder 2,6-Dimethylphenyl, 2-Ethylphenyl, 4-Ethylphenyl, 4-Propylphenyl, 4-Isopropylphenyl, 4-Butylphenyl, 2-Methoxyphenyl, 4-Methoxyphenyl, 4-Ethoxyphenyl, 4-Propoxyphenyl, 4-Butoxyphenyl, 2-Chlorphenyl, 4-Chlorphenyl, 2,4- oder 2,6-Dichlorphenyl, 4-Bromphenyl oder 2-Methyl-4-chlorphenyl.

R³ und R⁴ in den Formeln IV und V bedeuten weiterhin z.B. Mono- oder Dimethylamino, Mono- oder Diethylamino, Mono- oder Dipropylamino, Mono- oder Diisopropylamino, Mono- oder Dibutylamino, Mono- oder Dipentylamino, Mono- oder Dihexylamino, Mono- oder Diheptylamino, Mono- oder Dioctylamino, Mono- oder Di(2-ethylhexyl)amino, Mono- oder Dinonylamino, Mono- oder Didecylamino, N-Methyl-N-ethylamino, Fluor, Chlor oder Brom.

Vorzugsweise wird das erfindungsgemäße Verfahren mit 2,5-Dianilino-3,6-dihydroterephthalsäurederivaten der Formel IV oder 2,5-Dianilinoterephthalsäurederivaten der Formel V, wobei R³ und R⁴ jeweils C₁-C₁₀-Alkoxy bedeuten, durchgeführt.

Eine bevorzugte Verfahrensweise besteht darin, daß man in der Reaktion a) die Cyclisierung bei einer Temperatur von 350 bis 450°C durchführt.

Eine weitere bevorzugte Verfahrensweise besteht darin, daß man in der Reaktion b) die Cyclisierung und Dehydrierung der 2,5-Dianilino-3,6-dihydroterephthalsäurederivate bei einer Temperatur von 450 bis 650°C durchführt.

Eine weitere bevorzugte Verfahrensweise besteht darin, daß man in der Reaktion b) die Cyclisierung der 2,5-Dianilinoterephthalsäurederivate bei einer Temperatur von 350 bis 550°C durchführt.

Eine weitere bevorzugte Verfahrensweise besteht darin, daß man in der Reaktion c) die Cyclisierung bei einer Temperatur von 400 bis 650°C durchführt.

Eine Erhöhung der Cyclisierungstemperatur über die genannten Werte hinaus ist zwar möglich, erbringt jedoch keine weiteren Vorteile.

Das erfindungsgemäße Verfahren kann in jeder durchströmbaren Apparatur durchgeführt werden. Zweckmäßig verwendet man z.B. Wirbelbett- oder Festbettreaktoren, wobei die Verwendung von Rohr- oder Sprühreaktoren bevorzugt ist. Insbesondere bevorzugt ist die Durchführung des erfindungsgemäßen Verfahrens in einem leeren Rohrreaktor.

Für den Fall, daß man das erfindungsgemäße Verfahren in einem Wirbelbettreaktor durchführt, können sowohl inerte Feststoffe, z.B. Kieselgel, als auch katalytisch wirkende Feststoffe als Wirbelgut zur Anwendung kommen. Als solche Katalysatoren sind z.B. Aktivkohlesorten, Kokse, Tonerden, Aluminiumoxide oder Zeolithe zu nennen. Die Tonerden und Aluminiumoxide können dabei auch mit Alkalioxiden, Erdalkalioxiden oder mit Oxiden von Metallen der Gruppe 8 des Periodensystems der Elemente dotiert sein.

Die Reaktion c), in der man Dihydroterephthalsäurederivate IV oder Terephthalsäurederivate V zu Chinacridonchinonderivaten III cyclisiert, erfolgt in Gegenwart eines Oxidationsmittels. Als Oxidationsmittel dienen dabei beispielsweise Sauerstoff, Wasserstoffperoxid, Alkaliiodate oder Alkalipermanganate. Bevorzugt ist die Verwendung von Sauerstoff in Form von Luft.

Pro Mol zu cyclisierendes Agens (IV oder V) werden dabei 0,5 bis 100 Mol, vorzugsweise 5 bis 50 Mol eines Oxidationsmittels verwendet.

Wie oben bereits erwähnt, hat sich auch gezeigt, daß die Anwesenheit eines Oxidationsmittels die Cyclisierung von Dihydroterephthalsäurederivaten IV zu Dihydrochinacridonen I oder Chinacridonen II nicht nachteilig beeinflußt. Dies ist überraschend, denn aus der bereits genannten US-A-2 821 529, die die Cyclisierung von Dihydroterephthalsäurederivaten zu Dihydrochinacridonen in einem Lösungsmittel beschreibt, ist bekannt, daß dieser Umsetzungsschritt in Abwesenheit von Sauerstoff zu geschehen hat.

In manchen Fällen kann es vielmehr von Vorteil sein, die Cyclisierungsschritte IV→I oder IV→II in Gegenwart eines Oxidationsmittels, insbesondere von Sauerstoff in Form von Luft vorzunehmen. Je Äquivalent des zu cyclisierenden Agens IV werden in diesem Fall 1 bis 100 Äquivalent eines Oxidationsmittels verwendet.

Das erfindungsgemäße Verfahren kann sowohl in kontinuierlicher als auch diskontinuierlicher Arbeitsweise betrieben werden.

Das neue Verfahren wird zweckmäßig so durchgeführt, daß man das Ausgangsprodukt IV oder V in festem oder flüssigem Aggregatzustand, als Lösung oder in der Gasphase der Reaktionszone zuführt. Erfolgt die Cyclisierung in einem Wirbelbettreaktor, so ist es möglich, das Ausgangsprodukt entweder direkt in das Wirbelbett oder in den Gasraum darüber zu dosieren.

Entscheidend ist, daß das Ausgangsprodukt, wenn es in flüssigem oder festem Aggregatzustand oder als Lösung zugeführt wird, in feinverteilter Form in der Reaktionszone vorliegt.

Dies wird beispielsweise dadurch erreicht, daß das Ausgangsprodukt, wenn es in fester Form zugeführt wird, zunächst in einer Mühle behandelt und anschließend durch geeignete Förderapparaturen in die Reaktionszone eingerieselt wird. Es ist auch möglich, eine Suspension des Ausgangsprodukts, die z.B. in einem Dispergator erzeugt wird, in die Reaktionszone einzudosieren.

Wird das Ausgangsprodukt in flüssigem Aggregatzustand oder in Form einer Lösung zugeführt, so kann es in die Reaktionszone eingesprüht werden.

Geeignete Verdünnungs- oder Lösungsmittel sind z.B. Wasser, N,N-Dimethylformamid, N-Methylpyrrolidinon, C₁-C₆-Alkanole, Toluol, Xylol, Methylnaphthalin oder Aceton.

Wird das Ausgangsprodukt in der Gasphase umgesetzt, so wird es zweckmäßig vor Eintritt in die Reaktionszone verdampft.

Selbstverständlich kann das Ausgangsprodukt gleichzeitig sowohl in flüssigem und festem Aggregatzustand, als Lösung und in der Gasphase vorliegen.

Es ist jeweils auch möglich das Ausgangsprodukt durch Erzeugung eines Druckgefälles in die Reaktionszone "einzusaugen".

Die Zuführung der Ausgangsprodukte kann in allen Fällen auch in Gegenwart eines Gasstroms erfolgen.

Als Trägergase kommen unter den Reaktionsbedingungen inerte Gase, wie Edelgase, Kohlendioxid, Stickstoff oder verdampfte inerte, unter Normalbedingungen flüssige Verdünnungsmittel, z.B. Aceton, N,N-Dimethylformamid, Benzol, Methylnaphthalin oder deren Mischungen in Betracht. Es kann aber auch Luft als Bestandteil des Trägergases verwendet werden.

Im erfindungsgemäßen Verfahren ist, unabhängig davon, ob man in An- oder Abwesenheit des obengenannten Gasstroms arbeitet, immer ein schwacher Gasstrom vorhanden. Dieser besteht aus dem sich abspaltenden Wasserstoff und/oder den sich abspaltenden Komponenten R³H oder R⁴H, wobei R³ und R⁴ jeweils die obengenannte Bedeutung besitzen. Diese Komponenten bilden sich nämlich zwangsläufig bei der Cyclisierung der entsprechenden Ausgangsprodukte IV oder V.

Bevorzugt ist eine Verfahrensweise, in der, unter Verwendung eines Rohr- oder Sprühreaktors, eine wäßrige Suspension des Ausgangsprodukts IV oder V direkt in den Reaktionsraum eingesprüht oder als feiner Nebel, zusammen mit einem Trägergas, eingedüst wird.

Wenn man das Ausgangssprodukt IV oder V als Suspension der Reaktionszone zuführt, ist es zweckmäßig, das Verdünnungsmittel unmittelbar am Beginn der Reaktionszone zu verdampfen. Dies kann vorteilhaft mittels Strahlungsenergie, z.B. durch Arbeiten in einem glühenden Rohr oder bei polaren Lösungsmitteln in Form von Mikrowellen geschehen.

Auch die Energiezufuhr für das erfindungsgemäße Verfahren kann vorteilhaft durch Strahlungsenergie, z.B. durch Mikrowellen oder insbesondere durch Arbeiten in einem rotglühenden Rohr, erfolgen. Weiterhin kann die Energiezufuhr beispielsweise auch mit einem heißen Gasstrom oder mit einem Plasma erfolgen.

Die Verweilzeit des Reaktionsgemisches im Reaktor beträgt im Fall der Reaktion a) im allgemeinen 0,1 bis 5 Sekunden, vorzugsweise 0,1 bis 1 Sekunde und insbesondere 0,5 Sekunden, im Fall der Reaktion b) im allgemeinen 0,1 bis 10 Sekunden, vorzugsweise 1 bis 5 Sekunden und insbesondere 1 Sekunde (für Dihydroterephthalsäurederivate IV) oder 0,1 bis 5 Sekunden, vorzugsweise 0,1 bis 1 Sekunden und insbesondere 0,5 Sekunden (für Terephthalsäurederivate V) und im Fall der Reaktion c) 0,5 bis 10 Sekunden, vorzugsweise 1 bis 5 Sekunden und insbesondere 3 Sekunden.

Durch Variation der Reaktionstemperatur im erfindungsgemäßen Bereich sowie durch Variation der Verweilzeit des Reaktionsgemischs im Reaktor ist es möglich, die Zielprodukte I, II und III jeweils in reiner Form oder auch deren Mischungen herzustellen.

Die Abtrennung der Zielprodukte erfolgt nach an sich bekannten Methoden, z.B. durch Anwendung von Zyklonen, durch Naßabscheidung und Kühlfallen, durch mechanische und elektrische Gasfilter oder durch Kombination dieser Maßnahmen. Es ist aber auch möglich, das aus der US-A-2 460 538 bekannte Verfahren zur selektiven Desublimation anzuwenden.

Der Vorteil des neuen Verfahrens liegt darin, daß man ausgehend von den Dihydroterephthalsäurederivaten IV oder den Terephthalsäurederivaten V in einer Stufe direkt zu den Zielprodukten gelangt, wobei die Reaktionszeit äußerst kurz ist. Mit Ausnahme des Falles, daß man die Ausgangsprodukte in Lösung oder Suspension zuführt, sind im erfindungsgemäßen Verfahren auch keine Lösungsmittel notwendig. In den bekannten Verfahren dagegen ist die Anwesenheit von Lösungsmittel erforderlich, wobei, da die meisten Verfahren über mehrere Stufen laufen, häufig unterschiedliche Solventien für die einzelnen Verfahrensschritte anzuwenden sind.

Die mittels des erfindungsgemäßen Verfahrens erhältlichen Dihydrochinacridonderivate I sind wertvolle Zwischenprodukte für die Synthese von Pigmenten. Bei den Chinacridonderivaten II und bei den Chinacridonchinonderivaten III handelt es sich um Pigmente.

Die folgenden Beispiele sollen die Erfindung näher erläutern.

### Beispiel 1

Eine Suspension von 250 g 2,5-Dianilino-3,6-dihydroterephthalsäurediethylester in 1 l Wasser wurde mittels Einstoff-Düse in einem Stickstoffstrom (1,5 m³) in einen Rohrreaktor (Durchmesser 50 mm, Länge 300 mm) bei 650°C innerhalb 1 Stunde axial eindosiert. Mittels Naßabscheider wurden 183 g Chinacridon isoliert.

### Beispiel 2

200 g feingemahlener 2,5-Dianilino-3,6-dihydroterephthalsäuredipropylester wurden mittels Bürstendosieren (Gasstrom: 2 m³/h Stickstoff und 0,5 m³/h Luft) innerhalb einer Stunde durch einen Rohrreaktor (Durchmesser 40 mm, Länge 750 mm) bei 575°C geleitet. Mittels Naßabscheider wurden 130 g reines Chinacridon isoliert.

### Beispiel 3

Es wurden 150 g feingemahlener 2,5-Dianilino-3,6-dihydroterephthalsäuredibutylester (Körnung: 1 bis 100 µm) mittels Feststoffdosieren durch einen Reaktor (Durchmesser 40 mm, Länge 1500 mm) innerhalb 1 Stunde bei 620°C durchrieseln gelassen. ES wurden 80 g eines roten Feststoffs isoliert, bei dem es sich laut HPLC-Analyse um ein 1:1-Gemisch aus Dihydrochinacridon und Chinacridon handelte.

### Beispiel 4

Eine Schmelze von 350 g 2,5-Dianilino-3,6-dihydroterephthalsäurediisobutylester wurde mittels Einstoffdüse innerhalb 1 Stunde in die in Beispiel 1 beschriebene Apparatur versprüht. Der Reaktor wurde dabei durch elektrischen Strom rotglühend aufgeheizt. Im Gasraum wurde mittels eines Thermoelements eine Temperatur von 650°C ermittelt. Mit einem Gasfilter wurden 213 g rohes Chinacridon mit einer Reinheit von 95 % erhalten.

### Beispiel 5

Eine wäßrige Suspension von 100 g feingemahlenem 2,5-Dianilino-3,6-dihydroterephthalsäuredimethylester in 500 ml Wasser wurde in einem Gasstrom aus 10 m³/h Stickstoff und 2 m³/h Luft, der auf 850°C vorerhitzt war, innerhalb 1 Stunde in einen Laborsprühtrockner eingedüst. Mit einem Venturi-Wäscher wurden 72 g reines Chinacridon erhalten.

### Beispiel 6

In einen Wirbelbettreaktor (Durchmesser 60 mm, Länge 1000 mm) der Aluminiumoxid der Körnung 0,2 bis 0,4 mm enthielt, wurde bei einer Temperatur von 550°C pro Stunde eine Lösung von 100 g 2,5-Dianilino-3,6-dihydroterephthalsäuredimethylester, gelöst in 300 ml Methylnaphthalin, dosiert. Als Wirbelgas wurden 300 l/h Stickstoff und 50 l/h Luft, die jeweils auf 500°C vorerhitzt waren, benutzt. Die Abtrennung des Reaktionsprodukts erfolgte mittels Zyklon und nachgeschalteter Wasserwäsche. Dabei wurden pro Stunde 60 g roter Feststoff erhalten, bei dem es sich laut UV-Spektrum und Röntgenanalyse um Chinacridon mit einer Reinheit von 96 % handelt.

In analoger Weise wurden die in Tabelle 1 aufgeführten Beispiele 2 bis 4 durchgeführt.

Als Ausgangsprodukt diente ein Dihydroterephthalsäurederivat der Formel

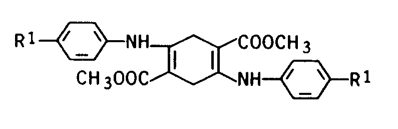

**Tabelle 1**

| Beispiel Nr. | R¹ | Temperatur [°C] | Ausbeute [g/h] | Reinheit [%] |
|---|---|---|---|---|
| 7 | CH₃ | 570 | 75 | 98 |
| 8 | Cl | 550 | 82 | 93 |
| 9 | H | 525 | 68 | 85 |

### Beispiel 10

Es wurden pro Stunde 125 g 2,5-Dianilino-3,6-dihydroterephthalsäuredimethylester, gelöst in 350 ml N-Methylpyrrolidon, in einem Wirbelbettverdampfer (Durchmesser 50 mm, Länge 600 mm, mit Kieselgel als Wirbelgut) in einem Stickstoffstrom (100 l/h) verdampft und bei einer Temperatur von 480°C kontinuierlich über ein Festbett (Durchmesser 60 mm, Länge 300 mm) aus Tonerdesträngen geleitet. Aufarbeitung und Charakterisierung erfolgten analog Beispiel 6. Es wurden pro Stunde 71 g Produkt, bestehend aus 80 % Chinacridon und 20 % Dihydrochinacridon, isoliert.

### Beispiel 11

Mittels einer Venturi-Düse wurde pro Stunde eine Lösung aus 300 g 2,5-Dianilino-3,6-dihydroterephthalsäuredimethylester und 400 ml N,N-Dimethylformamid in einen auf 500°C vorerhitzten Gasstrom aus Stickstoff (1,2 m³/h) und Luft (300 l/h) verdüst. Dieses Gas-Flüssigkeitsgemisch wurde bei 575°C tangential in einen Rohrreaktor (Durchmesser 50 mm, Länge 400 mm) eingeleitet. Nach üblicher Aufarbeitung wurden pro Stunde 224 g Rohchinacridon mit einer Reinheit von 98 % (nach UV) erhalten.

### Beispiel 12

Eine Suspension aus 400 g 2,5-Dianilino-3,6-dihydroterephthalsäuredimethylester und 1 l Wasser wurde mittels Zweistoffdüse mit 1,5 m³ Stickstoff in einen Rohrreaktor bei 590°C eingedüst. Zusätzlich wurde ein Gasgemisch aus 400 l Luft und 600 l Stickstoff seitlich eingeleitet. Es wurden 300 g Chinacridon mit einer Reinheit von >97 % erhalten.

### Beispiel 13

Analog Beispiel 6 wurden pro Stunde 100 g 2,5-Dianilino-3,6-dihydroterephthalsäurediethylester bei 425°C umgesetzt. Als Wirbelgas wurde Stickstoff (400 l/h) verwendet. Es wurden nach analoger Aufarbeitung pro Stunde 58 g Dihydrochinacridon erhalten.

### Beispiel 14

In der in Beispiel 12 beschriebenen Apparatur wurden bei 680°C 400 g 2,5-Dianilino-3,6-dihydroterephthalsäuredimethylester mit einem Gasstrom aus 1 m³ Stickstoff und 1 m³ Luft verdüst. Es wurden 310 g Chinacridonchinon mit einer Reinheit von 90 % isoliert.

### Beispiel 15

In der in Beispiel 12 beschriebenen Apparatur wurden pro Stunde 300 g 2,5-Dianilinoterephthalsäuredimethylester mit Stickstoff (1 m³/h) bei 475°C verdüst. Mittels Luftfilter wurden pro Stunde 250 g Chinacridon mit hoher Reinheit isoliert.

### Beispiel 16

In der in Beispiel 11 beschriebenen Apparatur wurde pro Stunde eine Lösung aus 200 g 2,5-Dianilinoterephthalsäurediethylester in 1 l N-Methylpyrrolidon in einem Stickstoffstrom (1 m³/h) bei 475°C umgesetzt. Nach Abscheidung mittels Luftfilter wurden pro Stunde 150 g Chinacridon mit einer UV-spektroskopisch bestimmten Reinheit von 90 % isoliert.

### Beispiel 17

Es wurden pro Stunde 100 g 2,5-Dianilino-3,6-dihydroterephthalsäuredimethylester, gelöst in 250 ml N-Methylpyrrolidon, in einem Stickstoffstrom (100 l/h) verdampft. Dieser Gasstrom wurde bei 375°C über ein Festbett (Durchmesser 50 mm, Länge 500 mm, Wirbelgut mit Kupferoxid dotierte Aluminumoxid-Stränge) geleitet. Es wurden mittels Naßquench und Feststoffilter 80 g pro Stunde eines roten Feststoffes isoliert, bei dem es sich nach UV- und röntgenspektroskopischer Untersuchung um reines Dihydrochinacridon handelt.

### Beispiel 18

Eine Suspension aus 200 g 2,5-Dianilino-3,6-dihydroterephthalsäuredimethylester in 1 l Wasser wurde mittels Zweistoffdüse mit 1,5 m³ Stickstoff in einen Rohrreaktor (Durchmesser 50 mm, Länge 300 mm) bei 395°C eingedüst. In einem Feststoffilter wurden 170 g Dihydrochinacridon (Reinheit 95 %, neben ca. 3 % Chinacridon) erhalten.

Analog Beispiel 18 wurden die in Tabelle 2 aufgeführten Beispiele 19 bis 24 durchgeführt. Als Ausgangsprodukt diente ein Dihydroterephthalsäurederivat der Formel 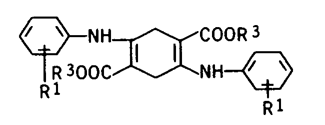
Als Reaktionsprodukt fielen jeweils die entsprechenden Dihydrochinacridone an.

**Tabelle 2**

| Beispiel Nr. | R¹ | R³ | Temperatur [°C] | Ausbeute [g/h] | Reinheit [%] |
|---|---|---|---|---|---|
| 19 | 3-CH₃ | CH₃ | 330 | 75 | 85 |
| 20 | 4-CH₃ | CH₃ | 350 | 77 | 93 |
| 21 | 3-Cl | CH₃ | 425 | 80 | 89 |
| 22 | 4-Cl | CH₃ | 385 | 73 | 88 |
| 23 | 4-CH₃ | C₂H₅ | 390 | 71 | 96 |
| 24 | 4-Cl | C₂H₅ | 400 | 70 | 91 |

## Patentansprüche

1. Verfahren zur Herstellung von Dihydrochinacridonen der Formel I 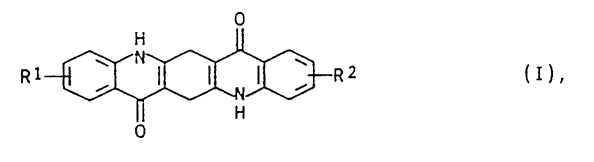 von Chinacridonen der Formel II 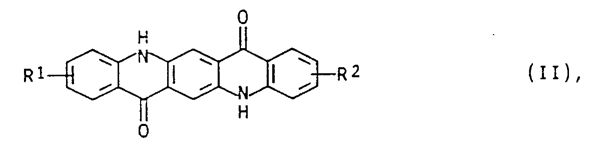 von Chinacridonchinonen der Formel III 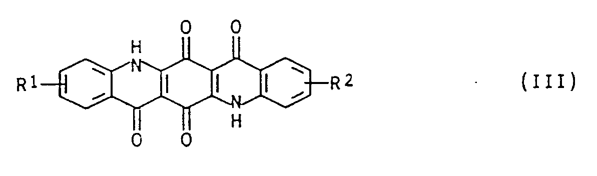 oder von deren Gemischen, wobei R¹ und R² in den Formeln I, II und III gleich oder verschieden sind und unabhängig voneinander jeweils Wasserstoff, Chlor, Brom, C₁-C₁₀-Alkoxy, C₁-C₁₀-Alkyl oder gegebenenfalls substituiertes Phenyl bedeuten, dadurch gekennzeichnet, daß man
a) zur Herstellung von Dihydrochinacridonen der obengenannten Formel I 2,5-Dianilino-3,6-dihydroterephthalsäurederivate der Formel IV 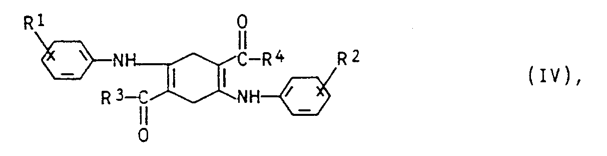 in der R¹ und R² jeweils die obengenannte Bedeutung besitzen und R³ und R⁴ gleich oder verschieden sind und unabhängig voneinander jeweils C₁-C₁₀-Alkoxy, Amino, C₁-C₁₀-Mono- oder Dialkylamino oder Halogen bedeuten, in flüssigem oder festem Aggregatzustand, jeweils in feinverteilter Form, oder in der Gasphase bei einer Temperatur von 350 bis 500°C cyclisiert,
b) zur Herstellung von Chinacridonen der obengenannten Formel II 2,5-Dianilino-3,6-dihydroterephthalsäurederivate der obengenannten Formel IV in flüssigem oder festem Aggregatzustand oder als Lösung, jeweils in feinverteilter Form, oder in der Gasphase bei einer Temperatur von 400 bis 700°C cyclisiert und dehydriert oder 2,5-Dianilinoterephthalsäurederivate der Formel V 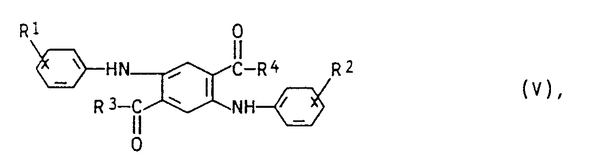 in der R¹, R², R³ und R⁴ jeweils die obengenannte Bedeutung besitzen, in flüssigem oder festem Aggregatzustand, jeweils in feinverteilter Form, oder in der Gasphase bei einer Temperatur von 300 bis 700°C cyclisiert und
c) zur Herstellung von Chinacridonchinonen der obengenannten Formel III 2,5-Dianilino-3,6-dihydroterephthalsäurederivate der obengenannten Formel IV oder 2,5-Dianilinoterephthalsäurederivate der obengenannten Formel V in flüsssigem oder festem Aggregatzustand oder als Lösung, jeweils in feinverteilter Form, oder in der Gasphase bei einer Temperatur von 300 bis 700°C in Gegenwart eines Oxidationsmittels cyclisiert.

2. Verfahren gemäß Anspruch 1, dadurch gekennzeichnet, daß R³ und R⁴ in den Formeln IV und V jeweils C₁-C₁₀-Alkoxy bedeuten.

3. Verfahren gemäß Anspruch 1, dadurch gekennzeichnet, daß man die Cyclisierung in einem leeren Rohrreaktor durchführt.

4. Verfahren gemäß Anspruch 1, dadurch gekennzeichnet, daß man in der Reaktion a) die Cyclisierung bei einer Temperatur von 350 bis 450°C durchführt.

5. Verfahren gemäß Anspruch 1, dadurch gekennzeichnet, daß man in der Reaktion b) die Cyclisierung und Dehydrierung der 2,5-Dianilino-3,6-dihydroterephthalsäurederivate bei einer Temperatur von 450 bis 650°C durchführt.

6. Verfahren gemäß Anspruch 1, dadurch gekennzeichnet, daß man in der Reaktion b) die Cyclisierung der 2,5-Dianilinoterephthalsäurederivate bei einer Temperatur von 350 bis 550°C durchführt.

7. Verfahren gemäß Anspruch 1, dadurch gekennzeichnet, daß man in der Reaktion c) die Cyclisierung bei einer Temperatur von 400 bis 650°C durchführt.

8. Verfahren gemäß Anspruch 1, dadurch gekennzeichnet, daß man in der Reaktion c) Luft als Oxidationsmittel verwendet.

## Claims

1. A process for preparing a dihydroquinacridone of the formula I 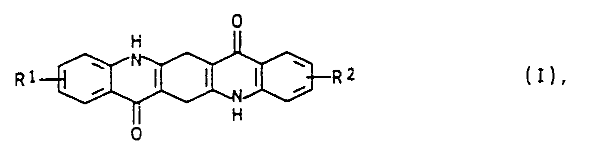 a quinacridone of the formula II 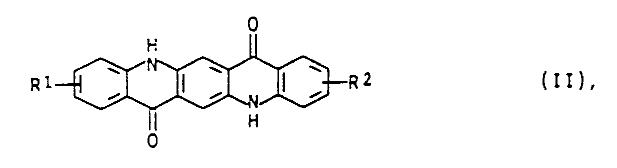 a quinacridonequinone of the formula III 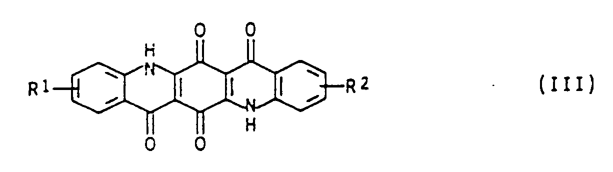 or a mixture thereof, with R¹ and R² in the formulae I, II and III being identical or different and each being independently of the other hydrogen, chlorine, bromine, C₁-C₁₀-alkoxy, C₁-C₁₀-alkyl or substituted or unsubstituted phenyl, wherein
a) to prepare a dihydroquinacridone of the abovementioned formula I a 2,5-dianilino-3,6-dihydroterephthalic acid derivative of the formula IV 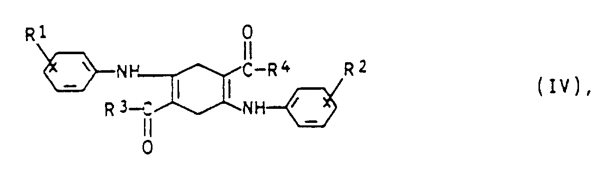 where R¹ and R² each have the abovementioned meanings and R³ and R⁴ are identical or different and are each independently of the other C₁-C₁₀-alkoxy, amino, C₁-C₁₀-mono- or -dialkylamino or halogen, is cyclized in the liquid or solid state, in each case in a finely divided form, or in the gas phase at from 350 to 500°C,
b) to prepare a quinacridone of the abovementioned formula II a 2,5-dianilino-3,6-dihydroterephthalic acid derivative of the abovementioned formula IV is cyclized and dehydrogenated in the liquid or solid state or in solution, in each case in a finely divided form, or in the gas phase at from 400 to 700°C or a 2,5-dianilinoterephthalic acid derivative of the formula V 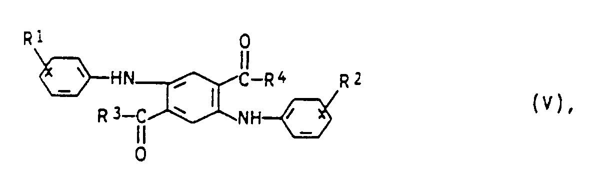 where R¹, R², R³ and R⁴ each have the abovementioned meanings, is cyclized in the liquid or solid state, in each case in a finely divided form, or in the gas phase at from 300 to 700°C and
c) to prepare a quinacridonequinone of the abovementioned formula III a 2,5-dianilino-3,6-dihydroterephthalic acid derivative of the abovementioned formula IV or a 2,5-dianilinoterephthalic acid derivative of the abovementioned formula V is cyclized in the liquid or solid state or in solution, in each case in a finely divided form, or in the gas phase at from 300 to 700°C in the presence of an oxidizing agent.

2. A process as claimed in claim 1, wherein R³ and R⁴ in the formulae IV and V are each C₁-C₁₀-alkoxy.

3. A process as claimed in claim 1, wherein the cyclization is carried out in an empty tubular reactor.

4. A process as claimed in claim 1, wherein in reaction a) the cyclization is carried out at from 350 to 450°C.

5. A process as claimed in claim 1, wherein in reaction b) the cyclization and dehydrogenation of the 2,5-dianilino-3,6-dihydroterephthalic acid derivative is carried out at from 450 to 650°C.

6. A process as claimed in claim 1, wherein in reaction b) the cyclization of the 2,5-dianilinoterephthalic acid derivative is carried out at from 350 to 550°C.

7. A process as claimed in claim 1, wherein in reaction c) the cyclization is carried out at from 400 to 650°C.

8. A process as claimed in claim 1, wherein in reaction c) the oxidizing agent used is air.

## Revendications

1. Procédé de préparation de dihydroquinacridones de formule I 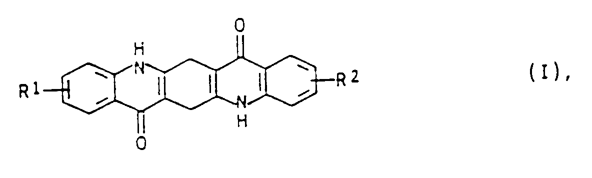 de quinacridones de formule II 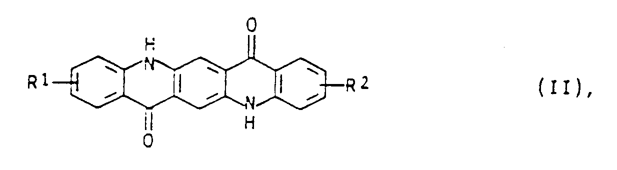 de quinacridonequinones de formule III 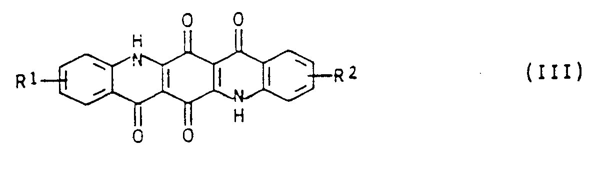 ou de leurs mélanges, R¹ et R² dans les formules I, II et III étant identiques ou différents et représentant chacun, indépendamment l'un de l'autre, un atome d'hydrogène, de chlore, de brome ou un reste alcoxy en C₁-C₁₀, alkyle en C₁-C₁₀ ou phényle éventuellement substitué, caractérisé en ce que
a) pour la préparation de dihydroquinacridones de formule I, on cyclise des dérivés d'acide 2,5-dianilino-3,6-dihydrotéréphtalique de formule IV 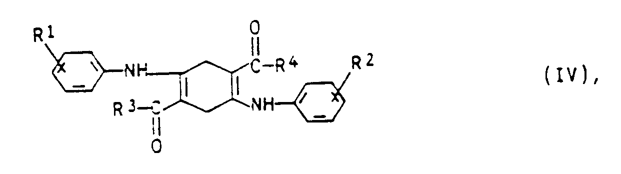 dans laquelle R¹ et R² ont chacun la signification donnée précédemment, et R³ et R⁴ sont identiques ou différents et représentent chacun un groupement alcoxy en C₁-C₁₀, amino, mono- ou di (alkyl en C₁-C₁₀)amino, à l'état liquide ou à l'état d'agrégat solide, chaque fois sous forme finement divisée, ou en phase gazeuse, à une température de 350 à 500°C,
b) pour la préparation de quinacridones de formule II, on cyclise et on déshydrogène des dérivés d'acide 2,5-dianilino-3,6-dihydrotéréphtalique de formule IV, à l'état liquide, à l'état d'agrégat solide ou sous forme de solution, chaque fois sous forme finement divisée, ou en phase gazeuse, à une température de 400 à 700°C, ou bien on cyclise des dérivés d'acide 2,5-dianilinotéréphtalique de formule V 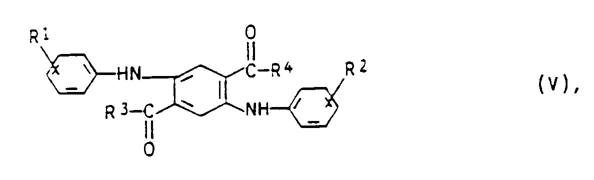 dans laquelle R¹, R², R³ et R⁴ ont chacun la signification donnée précédemment, à l'état liquide ou à l'état d'agrégat solide, chaque fois sous forme finement divisée, ou en phase gazeuse, a une température de 300 a 700°C, et
c) pour la préparation de quinacridonequinones de formule III, on cyclise des dérivés d'acide 2,5-dianilino-3,6-dihydrotéréphtalique de formule IV ou des dérivés d'acide 2,5-dianilinotéréphtalique de formule V, à l'état liquide, à l'état d'agrégat solide ou sous forme de solution, chaque fois sous forme finement divisée, ou en phase gazeuse, à une température de 300 à 700°C en présence d'un oxydant.

2. Procédé selon la revendication 1, caractérisé en ce que R³ et R⁴ dans les formules IV et V représentent chaque fois des restes alcoxy en C₁-C₁₀.

3. Procédé selon la revendication 1, caractérisé en ce qu'on effectue la cyclisation dans un réacteur tubulaire vide.

4. Procédé selon la revendication 1, caractérisé en ce que, dans la réaction a), on effectue la cyclisation à une température de 350 à 450°C.

5. Procédé selon la revendication 1, caractérisé en ce que, dans la réaction b), on effectue la cyclisation et la déshydrogénation des dérivés d'acide 2,5-dianilino-3,6-dihydrotéréphtalique à une température de 450 à 650°C.

6. Procédé selon la revendication 1, caractérisé en ce que, dans la réaction b), on effectue la cyclisation des dérivés d'acide 2,5-dianilinotéréphtalique à une température de 350 à 550°C.

7. Procédé selon la revendication 1, caractérisé en ce que, dans la réaction c), on effectue la cyclisation à une température de 400 à 650°C.

8. Procédé selon la revendication 1, caractérisé en ce que, dans la réaction c), on utilise de l'air comme oxydant.
